# EUROPEAN PATENT APPLICATION

(11) **EP 2 458 171 A2**
(43) Date of publication of application: **30.05.2012**
(21) Application number: 11189678.3
(22) Date of filing: 18.11.2011
(51) Int. Cl.: F01N 3/20, G01N 27/92

(54) **Contamination sensor**

(30) Priority: 24.11.2010 SE 1051228
(71) Applicant: Scania CV AB, 151 87 Södertälje (SE)
(72) Inventor: Lind, Hanna, 126 53 Hägersten (SE); Eriksson, Hans, 141 59 Huddinge (SE); Thibblin, Anders, 146 50 Tullinge (SE); Jonsson, Anders, 187 32 Täby (SE)

(57) **Abstract**

The invention relates to an exhaust cleaning device for urea-supported catalysis of exhaust gases, comprising a tank (51) for urea solution intended to be injected into the exhaust gases. In particular, the invention relates to a sensor (50) situated in the tank or a tank pipe and adapted to continuously monitoring for presence of petroleum products in the solution. The sensor preferably comprises a rubber element which has the property of expanding in contact with petroleum products, which expansion is utilised to generate a signal.

## Description

This invention relates to detection of contamination in urea solution tanks in SCR systems and more specifically to a sensor for this purpose.

### Background to the invention

An NOₓ selective reduction catalyst (SCR) is used in certain cases in exhaust cleaning to reduce nitrogen oxides (NOₓ) such as are for example released from diesel-powered vehicles, using an aqueous solution of urea as reducing agent. It is known that such a solution with a urea content of 32.5 wt% is with advantage usable to effectively achieve this reducing reaction. It sometimes happens, however, that the urea concentration in the tank containing the solution varies over time. There is also risk that the tank might be contaminated by other solutions or liquids, e.g. oil, which by mistake or accidentally make their way into the tank. It has therefore been proposed to use urea sensors to monitor the urea concentration in the solution in the tank. A version is described in US2007/00544091 A1.

A further development of this technique is described in US2008/205478 A1, in which a urea sensor has a detection portion which is used by being immersed in a liquid contained in a urea tank to detect the thermal conductivity of the liquid and thereby determine whether the solution in the tank is an aqueous solution of urea. There is also a casing which surrounds a periphery of the detection portion and is penetrated by one or more holes. A lower hole is of such configuration and size as to readily accommodate a first hypothetical circle with a diameter of not less than 3.5 mm. At least part of the lower hole is situated below the detection portion when the urea sensor is installed in the urea solution tank.

That specification therefore describes a urea sensor which monitors the concentration of urea and conveys alarm if the concentration deviates from a setpoint value.

None of these prior art devices describe direct and continuous monitoring for presence of contaminating substances in the urea solution.

### Summary of the invention

In the light of the problems pertaining to the technique described in the introduction, the inventors have devised a novel detection method and sensors for detection of organic contaminants, especially petroleum products (e.g. diesel fuel and solvents) in the urea tank of an SCR system.

The object is thus to propose an effective and inexpensive sensor for determining whether the urea solution is contaminated by, for example, diesel fuel, which sensor immediately conveys alarm when such is the case.

This object is achieved with a device according to claim 1 whereby a sensor is adapted to detecting any presence of petroleum products, e.g. diesel fuel, in a urea solution intended for use in an exhaust cleaning system based on catalysis.

The sensor is preferably made of rubber material which has the characteristic of expanding upon contact with petroleum products, e.g. diesel fuel.

This expansion is preferably used to exert a mechanical effect upon a contact or some other means so that an electrical circuit is closed or broken.

The invention is explained below in more detail with reference to the attached drawings, in which
Fig. 1a depicts an embodiment of a sensor according to the invention in an unexpanded state,
Fig. 1b depicts the sensor in Fig. 1a in an expanded state whereby a contact is closed,
Fig. 2a depicts another embodiment of a sensor according to the invention in an unexpanded state,
Fig. 2b depicts the sensor in Fig. 2a in an expanded state whereby a wire is broken and an electrical circuit is consequently broken,
Fig. 3 depicts a further embodiment of a sensor according to the invention,
Fig. 4a depicts yet another embodiment of a sensor according to the invention,
Fig. 4b depicts a variant of the embodiment in Fig. 4a,
Fig. 5a depicts a location of a sensor, and
Fig. 5b depicts another location of a sensor.

### Detailed description of preferred embodiments

The fundamental inventive concept of the present invention is detecting whether petroleum products have contaminated the urea solution in a tank belonging to an SCR system for catalytic exhaust cleaning.

The invention is based on using a sensor which monitors for presence of small amounts of petroleum products, e.g. diesel fuel.

In a preferred embodiment, the sensor comprises rubber material which has the property of expanding when in contact with petroleum products. This expansion is used in different variants in different ways to generate a signal.

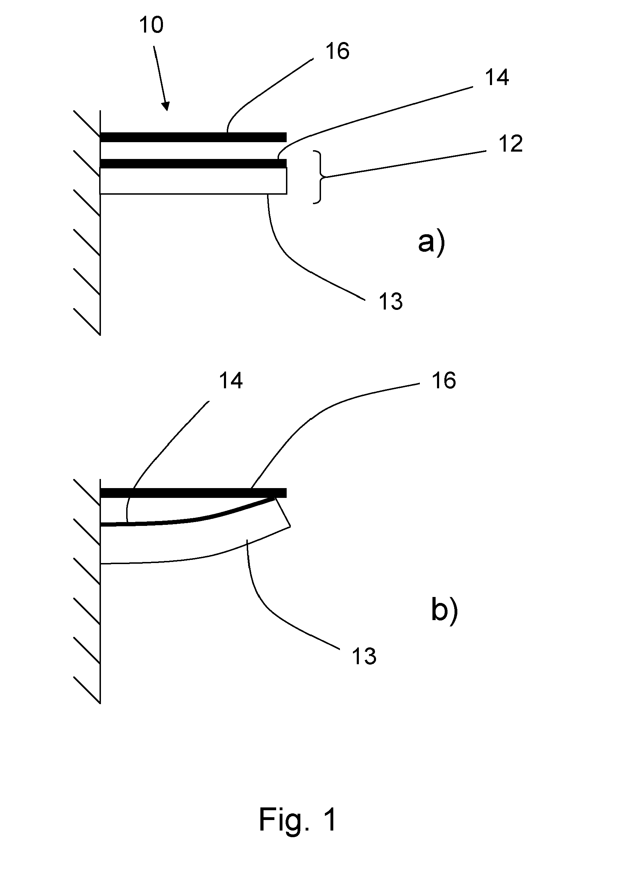

In an embodiment, a sensor, generally designated by ref. 10, is provided in the form of a composite element 12 in which a rubber block 13 or the like has at least one planar surface on which a flexible metal plate (sheet or foil) 14 is bonded. Fig. 1a depicts such a sensor element.

The metal portion has two functions, one being to serve as a diffusion barrier (to prevent organic substances from making their way in), the other to be electrically conductive. This may be achieved in two ways, either by means of metal foil which both serves as barrier layer and can close an electrical circuit, or by putting in place a barrier layer, e.g. of polytetrafluoroethylene (Teflon®) and placing on it a metal foil (not necessarily covering the whole rubber surface) which is capable of closing a circuit.

When the rubber/metal composite element 12 comes into contact with a petroleum product which causes the rubber to expand, the metal plate 14, which is not affected by petroleum products, will prevent the rubber 13 from expanding on the side adjacent to it, whereas the rubber will expand on the opposite side, leading to bending of the whole composite element as depicted in Fig. 1b (comparable with how a bimetal reacts when warmed).

Expansion of rubber is typically 100%, resulting in a substantial deflection of the sensor element when exposed to oil. The spacing has to be enough to avoid accidental contact, e.g. due to vibration.

The composite element 12 is with advantage firmly clamped at one end but unattached at the other end (see Figs. 1a-b). If a contact element 16 made of metal is situated adjacent to the metal plate 14 of the composite element 12, these two metal elements may be brought into contact by the bending due to the expansion of the rubber, thereby closing an electrical circuit and consequently generating an electrical signal which can be used to give warning that contamination has occurred.

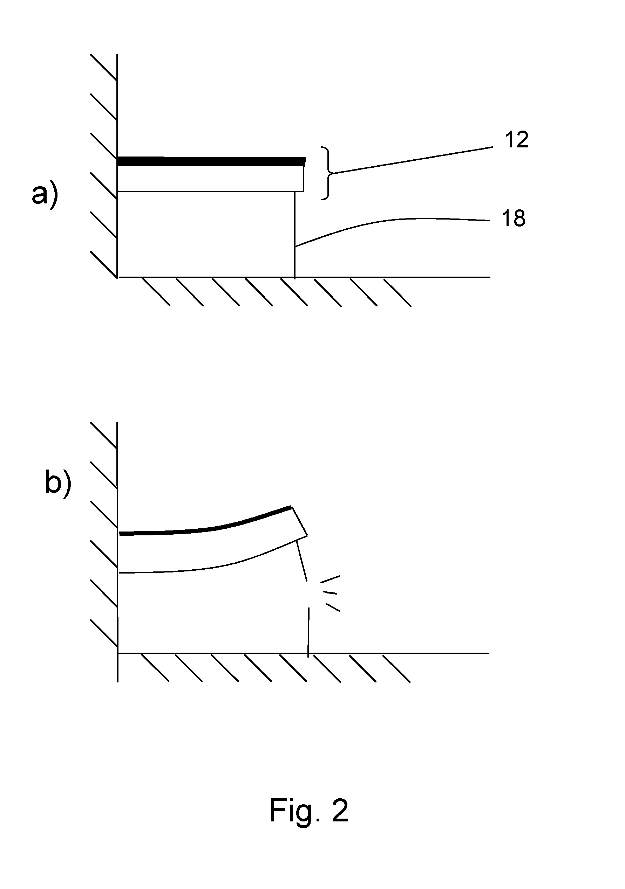

In an alternative embodiment, the rubber element 13 may be used as a one-way sensor, in which case a thin electrically conductive wire 18 is connected, as depicted in Fig. 2a, to the unattached end of the composite element 12 which is configured in the same way as described with reference to Fig. 1. When the rubber expands through having come into contact with, for example, diesel oil, it bends and the wire 18 is stretched far enough to break, see Fig. 2b. If a current is passing through the wire, the circuit is therefore broken when the wire breaks, generating a signal which can be used to give warning that contamination has occurred.

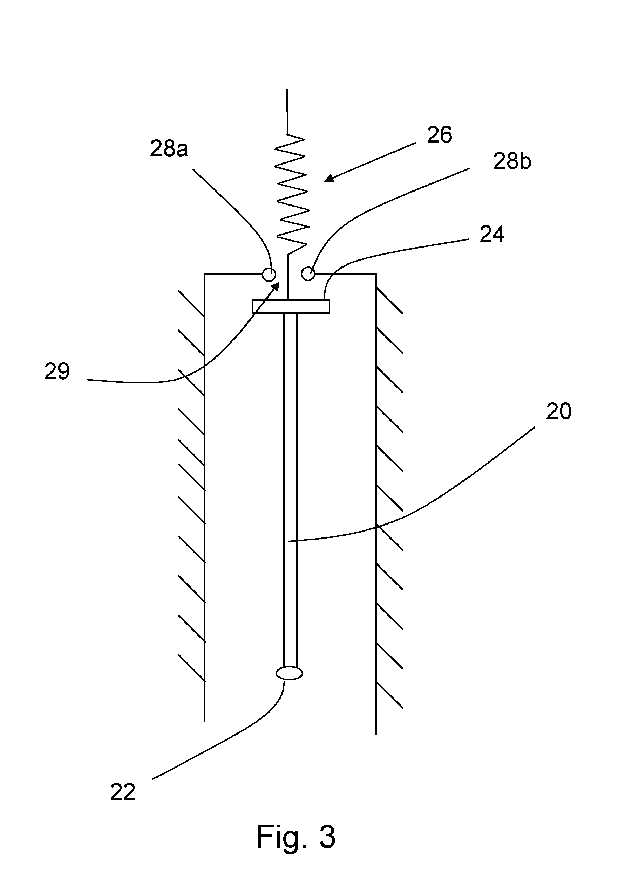

Fig. 3 depicts another embodiment of the invention.

In this case the sensor takes the form of a rubber strand 20, i.e. a relatively thin and elongate rubber element. Suitable dimensions are 2-10 cm long and a cross-section of up to 1x5 mm, i.e. the strand is preferably in strip form. A rectangular cross-section is best because a large surface is preferred.

The rubber strand is preferably fixed at one end 22. If the sensor is situated in a tank, it is preferably fastened to the bottom or a wall of the tank. At the other end of the rubber strand 22 there is a metal element 24 which has the function of closing an electrical circuit, as explained in the description below.

At the same end as the metal element there is a spring 26, preferably a coil spring. This spring keeps the rubber strand 20 in a stretched state and keeps it straight even when it expands upon contact with, for example, oil or diesel fuel.

The rubber strand 20 is so arranged that its metal element 24 is adjacent to a contact element which comprises two electrically conductive parts 28a, 28b at a distance from one another. A voltage is constantly applied across these contact elements. The spring 26 runs through the intermediate space 29 between the contact elements 28a, 28b. The metal element 24, e.g. in the form of a washer or ball situated on the rubber strand 22, is somewhat larger than the distance between the contact elements 28a, 28b, with the result that when the rubber expands the spring 26 will pull the strand 22, and consequently also the metal element 24 situated on the strand, towards the contact elements 28a, 28b, and when the rubber has expanded enough, i.e. when the strand has lengthened, the metal element 24 will come into contact with the two contact elements 28a, 28b and an electrical circuit will close, generating a signal which can be used to give warning that contamination has occurred.

It is possible to arrange the rubber strand 20 and the metal element 24 in such a way that the strand runs through the passage 29, in which case the metal element 24 will therefore not be on the end of the strand 20 but somewhere along it. It is important that the spring 26 keeps the strand straight when it expands and that the distance between the metal element 24 and the contact elements 28a, 28b is short enough for immediate contact to occur when a contaminant enters the tank.

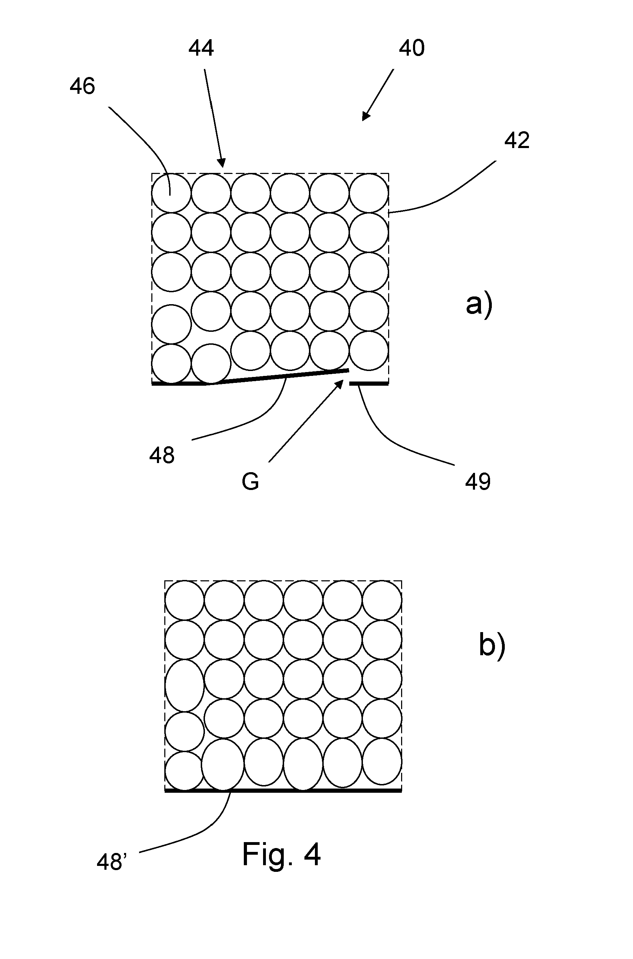

In a further alternative embodiment illustrated in Figs. 4a-b, the sensor 40 comprises a container 42 which is situated in the tank or the fuel pipe and which has at least one aperture, preferably a set of apertures 44, through which the liquid contained in or being put into the tank can enter. This container contains a set of rubber elements, preferably in the form of balls 46 with a diameter of between 1 and 3 mm. There is also a contact means 48, 49 in the form of a flexible tongue 48 which is situated with a gap G between it and a contact surface 49 and which is acted upon by the rubber elements when they expand, so that an electrical circuit is closed or broken, generating a signal.

The container may be made of perforated material with a plurality of apertures, the size of which apertures may vary within wide limits. The limitation is imposed by the size of the balls. The holes should be understood at being not larger than the balls.

A preferred ball size is 1-3 mm diameter, and a mesh size of a grid is preferably 0.5-1.5 mm.

In a preferred embodiment, the container is made of a gridlike material, which may be polymer or metal, but in the latter case preferably electrically isolated on the surface.

In the container there is a contact element so situated as to be mechanically acted upon by the expanding rubber balls so that an electrical circuit is closed and a signal is generated.

In the embodiment depicted, the contact element takes the form of a resilient metal tongue 48 adjacent to the bottom or a wall of the container. In a state where the rubber balls have not expanded there is an insulating gap G between the tongue and a contact 49, but when the rubber balls 46 expand and occupy more space the tongue 48 is pressed against the contact 49.

In another embodiment according to Fig. 4b, a thin metal foil is so situated that it is broken when the balls expand. If the metal foil is so configured that in an unbroken state it conducts current but in a broken state it prevents current from flowing, i.e. an electrical circuit is broken, this may also be utilised to generate a signal in a similar way to the "wire variant" in Fig. 1b.

Another possible alternative according to Fig. 4b is that the bottom 48' serves as a "door" which opens when the balls expand. If a thin metal wire (not depicted) is provided in a similar way to Fig. 2b, it may be caused to break and an electrical circuit to be broken, which may generate a signal.

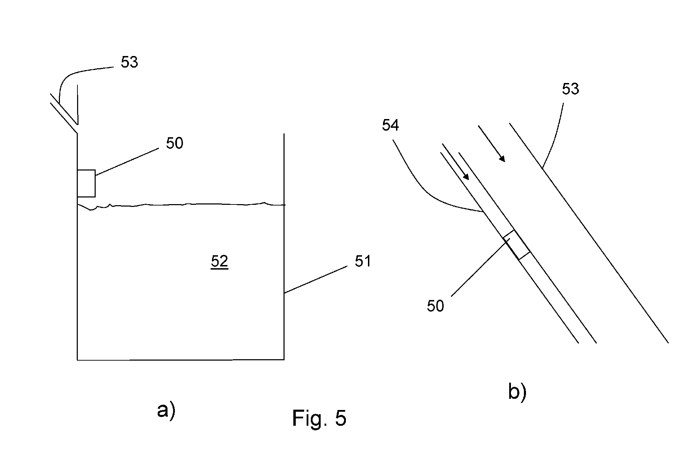

A sensor unit 50 according to the various embodiments described above may be provided in a tank 51 for urea solution 52 as depicted in Fig. 5a, in which case the sensor unit is preferably fitted on a wall close to the inlet from the tank pipe 53 so that any contaminating liquid comes immediately into contact with the sensor 50 and quickly generates a warning signal.

Alternatively, the sensor unit may be fitted in the tank pipe 53 as in Fig. 5b, in which case it is conceivable for the tank pipe to be provided with a separate pipe 54 or pipe segment in which the sensor 50 is fitted.

In both of these embodiments, it is in principle only when the tank is being filled that the sensor will thus be in contact with liquid. The sensor might also be so arranged that it is continually immersed in the fuel and monitors continuously the composition of the liquid.

In a further embodiment, the rubber element may be connected to an electrical resistance meter adapted to measuring a change in the resistance of the rubber when it expands in contact with petroleum products

## Claims

1. An exhaust cleaning device for urea-supported catalysis of exhaust gases, comprising a tank (51) for urea solution intended to be injected into the exhaust gases, a sensor (10; 20; 40; 50) in the form of a rubber element (13) which has the property of expanding in contact with petroleum products, which expansion is utilised to generate a signal,
which sensor (10, 20, 40, 50) is situated in the tank or the tank pipe and is adapted to monitoring for presence of petroleum products in the solution, **characterised in that** the sensor comprises a container (42) with at least one aperture (44) through which the liquid in the tank can enter, which container is provided with a set of rubber elements (46) and a contact means (48) which can be acted upon by the rubber elements (46) when they expand, so that an electric circuit is closed or broken, generating a signal.

2. A device according to claim 1, in which the container (42) is made of a gridlike material.

3. A device according to any one of the foregoing claims, in which the rubber is crosslinked or non-crosslinked elastomer, e.g. thermoplastic elastomers, ethylene propene diene monomer rubber (EPDM), natural rubber, butadiene-based elastomers.

4. A device according to any one of the foregoing claims, in which the sensor is adapted to monitoring for presence of diesel fuel or oil in the urea solution.

5. A device according to claim 1, in which the rubber element is connected to a resistance meter which is adapted to measuring a resistance change in the rubber when it expands in contact with petroleum products
